# EUROPEAN PATENT APPLICATION

(11) **EP 4 815 324 A1**
(43) Date of publication of application: **30.09.2026**
(21) Application number: 25217062.6
(22) Date of filing: 19.11.2025
(51) Int. Cl.: H04B 7/06

(54) **METHODS OF REPORTING CHANNEL STATE INFORMATION AND MODEL MANAGEMENT**

(30) Priority: 27.03.2025 US 202563778395 P; 06.11.2025 US 202519380980
(71) Applicant: Industrial Technology Research Institute, 310401 Hsinchu (TW)
(72) Inventor: Yen, Chia-Pang, 241510 New Taipei City (TW)
(74) Representative: Becker Kurig & Partner Patentanwälte mbB

(57) **Abstract**

Methods of reporting channel state information and model management are provided. In the method, a reporting configuration indicating a first set of physical resources and a first set of reference signals for reporting is received. A second set of reference signals on a second set of physical resources, which is a subset of the first set of physical resources or the first set of reference signals, is received. A first estimated channel information corresponding to the second set of reference signals on the second set of physical resources is determined. A second estimated channel information corresponding to the first set of reference signals on the first set of physical resources by using the first estimated channel information on a prediction model is determined. A channel state information associated with the second estimated channel information is reported. A prediction model is related to a masking ratio.

## Description

### TECHNICAL FIELD

The present disclosure relates generally to wireless communication systems, and more particularly, to methods of reporting Channel State Information (CSI) and model management.

### BACKGROUND

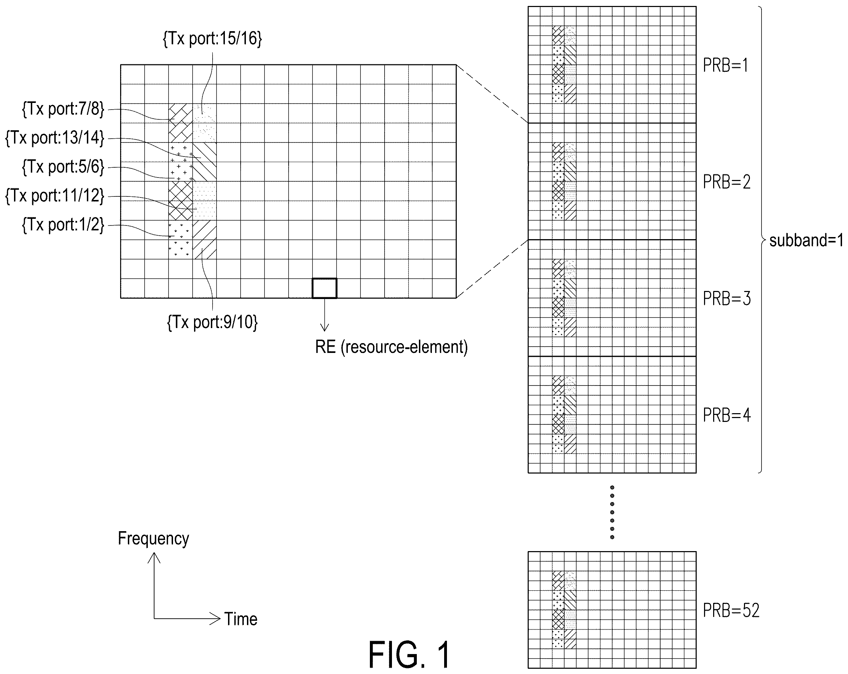

In modern wireless communication systems, such as 5G New Radio (NR) and beyond, accurately acquiring Channel State Information (CSI) is crucial for enabling advanced multi-antenna techniques. Typically, a network device transmits Channel-State-Information Reference Signals (CSI-RS) to a user equipment (UE). The UE then measures these signals to estimate the downlink channel characteristics and reports the estimated CSI back to the network device. These transmissions occur on a time-frequency grid, which is composed of fundamental units known as resource elements (REs), as conceptually illustrated in FIG. 1. Each RE represents a specific time and frequency resource within the communication channel.

Conventionally, the amount of CSI-RS resources required is directly proportional to the number of transmit antenna ports at the network device, with each antenna port's reference signal occupying one or more REs. As wireless communication evolves towards future releases, such as 6G, the number of antenna ports is expected to increase significantly to enhance system capacity. This trend renders the conventional one-to-one mapping between antenna ports and CSI-RS resources unscalable. Transmitting a full set of CSI-RS for a large number of antenna ports would consume an excessive amount of REs, leading to substantial overhead and reducing the resources available for data transmission, thereby limiting overall spectral efficiency.

### SUMMARY

The disclosure is directed to methods of reporting channel state information and model management.

According to one or more exemplary embodiments of the disclosure, a method of reporting channel state information, performed by a user equipment (UE), is provided. The method includes: receiving a reporting configuration, where the reporting configuration indicates a first set of physical resources and a first set of reference signals for reporting; receiving a second set of reference signals on a second set of physical resources, where the second set of physical resources is a subset of the first set of physical resources or the second set of reference signals is a subset of the first set of reference signals; determining a first estimated channel information corresponding to the second set of reference signals on the second set of physical resources; determining a second estimated channel information corresponding to the first set of reference signals on the first set of physical resources by using the first estimated channel information on a prediction model, where the prediction model is a signal processing algorithm or trained by a machine learning algorithm; and reporting a channel state information associated with the second estimated channel information.

According to one or more exemplary embodiments of the disclosure, a method of predicting channel state information, performed by a network device, is provided. The method includes: transmitting a reporting configuration, where the reporting configuration indicates a second set of physical resources and a second set of reference signals for reporting; transmitting a second set of reference signals on the second set of physical resources; receiving a channel state information report associated with first estimated channel information corresponding to the second set of reference signals on the second set of physical resources. The report is used on a prediction model for predicting a second estimated channel information corresponding to the first set of reference signals on the first set of physical resources, where the second set of physical resources is a subset of the first set of physical resources or the second set of reference signals is a subset of the first reference signals, and the prediction model is a signal processing algorithm or is trained by a machine learning algorithm.

According to one or more exemplary embodiments of the disclosure, a method of model management, performed by a UE, is provided. The method includes: relating a prediction model with a masking ratio, where the prediction model is a signal processing algorithm or trained by a machine learning algorithm, the prediction model is used by inputting a first estimated channel information to restore a second estimated channel information corresponding to a first set of reference signals with a first set of physical resources, a second set of reference signals on a second set of physical resources is used for determining the first estimated channel information, and the masking ratio is a ratio of a combination of the first set of reference signals and the first set of physical resources and a combination of the second set of reference signals and the second set of physical resources; and transmitting an indication of the prediction model.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a schematic diagram illustrating resource elements in a time-frequency grid according to an exemplary embodiment of the disclosure.
FIG. 2 is a schematic diagram illustrating a communication system according to an exemplary embodiment of the disclosure.
FIG. 3 is a flowchart illustrating a method of reporting channel state information performed by a user equipment (UE) according to an exemplary embodiment of the disclosure.
FIG. 4 is a signaling diagram illustrating a channel state information reporting procedure.
FIG. 5 is a signaling diagram illustrating a method of reporting channel state information with antenna-domain reference signal reduction according to an exemplary embodiment of the disclosure.
FIG. 6 is a signaling diagram illustrating a method of reporting channel state information with frequency-domain reference signal reduction according to an exemplary embodiment of the disclosure.
FIG. 7A is a signaling diagram illustrating a method of reporting channel state information with combined antenna-domain and frequency-domain reference signal reduction according to an exemplary embodiment of the disclosure.
FIG. 7B is a signaling diagram illustrating a method of reporting channel state information with combined antenna-domain and frequency-domain reference signal reduction according to an exemplary embodiment of the disclosure.
FIG. 7C is a schematic diagram illustrating a resource allocation according to an exemplary embodiment of the disclosure.
FIG. 7D is a signaling diagram illustrating a method of reporting channel state information for network side model according to an exemplary embodiment of the disclosure.
FIG. 8 is a flowchart illustrating a method of reporting channel state information performed by a network device according to an exemplary embodiment of the disclosure.
FIG. 9 is a flowchart illustrating a method of model management performed by a UE according to an exemplary embodiment of the disclosure.
FIG. 10 is a signaling diagram illustrating a model management procedure according to an exemplary embodiment of the disclosure.
FIG. 11 is a signaling diagram illustrating a network-initiated performance monitoring procedure according to an exemplary embodiment of the disclosure.
FIG. 12 is a block diagram illustrating a process for computing a key performance indicator (KPI) according to an exemplary embodiment of the disclosure.
FIG. 13 is a signaling diagram illustrating a UE-initiated performance monitoring procedure according to an exemplary embodiment of the disclosure.
FIG. 14 is a signaling diagram illustrating a model retraining procedure according to an exemplary embodiment of the disclosure.
FIG. 15 is a block diagram illustrating a communication device according to an exemplary embodiment of the disclosure.

### DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

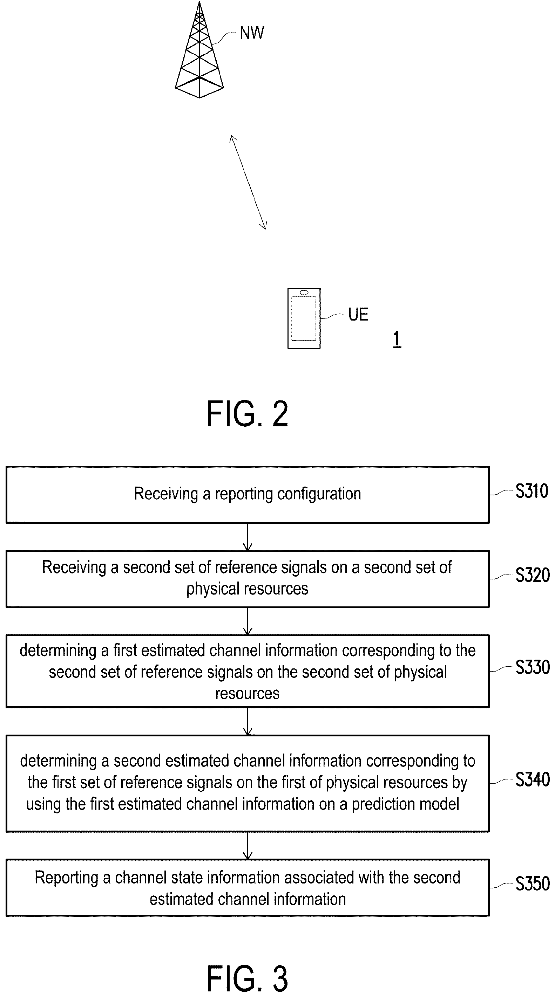

FIG. 2 is a schematic diagram illustrating a communication system 1 according to an exemplary embodiment of the disclosure. Referring to FIG. 2, a communication system 1 (e.g., a Long Term Evolution (LTE) system, an LTE-Advanced (LTE-A) system, an LTE-Advanced Pro system, a 5G NR Radio Access Network (RAN), or a 6G radio access network) typically includes at least one network device NW, at least one user equipment UE, and one or more optional network elements that provide connection towards a network. The user equipment UE communicates with the network (e.g., a Core Network (CN), an Evolved Packet Core (EPC) network, an Evolved Universal Terrestrial Radio Access Network (E-UTRAN), a 5G Core (5GC), or the internet), through a RAN established by one or more network devices.

It should be noted that, in the present disclosure, the user equipment UE may be, but is not limited to, a mobile station, a mobile terminal or device, or a user communication radio terminal. For example, the user equipment UE may be a portable radio equipment, which includes, but is not limited to, a mobile phone, a tablet, a wearable device, a sensor, a vehicle, or a Personal Digital Assistant (PDA) with wireless communication capability. The user equipment UE is configured to receive and transmit signals over an air interface to one or more cells in a radio access network.

A network device NW (may be called a base station) may be configured to provide communication services according to at least one of the following Radio Access Technologies (RATs): Worldwide Interoperability for Microwave Access (WiMAX), Global System for Mobile communications (GSM, often referred to as 2G), GSM Enhanced Data rates for GSM Evolution (EDGE) Radio Access Network (GERAN), General Packet Radio Service (GPRS), Universal Mobile Telecommunication System (UMTS, often referred to as 3G) based on basic wideband-code division multiple access (W-CDMA), high-speed packet access (HSPA), LTE, LTE-A, eLTE (evolved LTE, e.g., LTE connected to 5GC), NR (often referred to as 5G), and/or LTE-A Pro. However, the scope of the present disclosure should not be limited to the above-mentioned protocols.

A network device NW may include but is not limited to, a node B (NB) as in the UMTS, an evolved node B (eNB) as in the LTE or LTE-A, a radio network controller (RNC) as in the UMTS, a base station controller (BSC) as in the GSM/ GSM Enhanced Data rates for GSM Evolution (EDGE) Radio Access Network (GERAN), a next-generation eNB (ng-eNB) as in an Evolved Universal Terrestrial Radio Access (E-UTRA) base station in connection with the 5GC, a next-generation Node B (gNB) as in the 5G Access Network (5G-AN), and any other apparatus capable of controlling radio communication and managing radio resources within a cell. The network device NW may connect to serve one or more user equipments UE through a radio interface to the network.

The network device NW (or called base station) may be operable to provide radio coverage to a specific geographical area using a plurality of cells included in the RAN. The network device NW may support the operations of the cells. Each cell may be operable to provide services to at least one user equipment UE within its radio coverage. Specifically, each cell (often referred to as a serving cell) may provide services to serve one or more user equipments UEs within its radio coverage (e.g., each cell schedules the Downlink (DL) and optionally Uplink (UL) resources to at least one user equipment UE within its radio coverage for DL and optionally UL packet transmission). The network device NW may communicate with one or more user equipments UE in the radio communication system through multiple cells. It should be noted that for UL, the user equipment UE is a transmitter performing UL transmission, and the network device NW is a receiver performing UL reception. For DL, the user equipment UE is a receiver performing DL reception, and the network device NW is a transmitter performing DL transmission.

The base station NW may include a network node NN and one or more TRPs, such as TRP#1 and TRP#2.

It should be understood that the terms "system" and "network" used in the disclosure are often used interchangeably. The term "and/or" in the disclosure is only an association relationship describing the associated objects, which means that there can be three kinds of relationships, for example, A and/or B, which can mean three situations: A is present alone, A and B are present simultaneously, or B is present alone. In addition, the character "/" in the disclosure generally indicates that the associated objects are in an "or" relationship.

To facilitate understanding of the technical solutions of the embodiments of the disclosure, the technical concepts related to the embodiments of the disclosure are described below.

FIG. 3 is a flowchart illustrating a method of reporting channel state information performed by a user equipment (UE) UE according to an exemplary embodiment of the disclosure. The method of FIG. 3 may be implemented by a communication device, such as the user equipment UE described above. Referring to FIG. 3, in step S310, the user equipment UE receives a reporting configuration from the network device NW. Specifically, the reporting configuration indicates a first set of physical resources and a first set of reference signals for which the user equipment UE is expected to report channel state information (CSI). The first set of resources represents the complete or full channel information that the network device NW expects to obtain.

In one embodiment, the reporting configuration may be a CSI Reporting Setting configuration. Therefore, the user equipment UE may receive the CSI Resource Setting configuration, which indicates the first set of physical resources and the first set of reference signals. In another embodiment, the report configuration may be another configuration used for configuring CSI reporting. In one embodiment, the channel state information includes at least one of a Channel Quality Indicator (CQI), a Precoding Matrix Indicator (PMI), explicit MIMO channel coefficients or their eigen-vectors and eigen-values, a Rank Indicator (RI), a Layer Indicator (LI), or a signal strength indicator. However, the CSI may represent any channel quality related information, for example, received signal strength, signal quality, signal to noise ratio (SNR), signal to interference plus noise ratio (SINR) for other communication technologies.

In one embodiment, the type of the first set of physical resources includes a physical resource block (PRB), frequency band, and the number of antenna ports. For example, a reporting configuration indicates 52 PRBs and 16 antenna ports used for CSI reporting.

The reference signals are expected to be transmitted on the first set of physical resources for channel estimation/ measurement or CSI reporting. In one embodiment, the type of the reference signals may be Channel-State-Information Reference Signals (CSI-RS). For example, the CSI reporting setting may configure the user equipment UE to report CSI corresponding to a first set of N=16 antenna ports and X=52 Physical Resource Blocks (PRBs). In another embodiment, the type of the reference signals may be a Downlink (DL) RS, an Uplink (UL) RS, a Synchronization Signal Block (SSB), or a Demodulation Reference Signal (DM-RS).

In step S320, the user equipment UE receives a second set of reference signals on a second set of physical resources. Specifically, the second set of resources is a subset of the first set of resources indicated in the reporting configuration. That is, the second set of physical resources is less than the first set of physical resources, and/ or the second set of reference signals is less than the first set of reference signals. For example, the first set of physical resources is 52 PRBs and 16 antenna ports, and the second set of physical resources is 12 PRBs and 8 antenna ports. The first set of reference signals has 52*16=816 reference signals, and the second set of reference signals has 12*8=96 reference signals.

In one embodiment, the reporting configuration is a CSI Reporting Setting configuration, and a configuration for the second set of reference signals on the second set of physical resources is a CSI Resource Setting configuration. Therefore, the user equipment UE receives the CSI Resource Setting configuration, which indicates the second set of reference signals and the second set of physical resources from the network device NW. In response to receiving the CSI Resource Setting configuration, the user equipment UE receives the second set of reference signals on the second set of physical resources as indicated in the CSI Resource Setting configuration.

In step S330, the user equipment UE determines a first estimated channel information corresponding to the second set of reference signals on the second set of physical resources. Specifically, the second set of reference signals transmitted on the second set of physical resources is used for channel estimation/ measurement. Relative to the first set of reference signals, the result of channel estimation/ measurement (i.e., the first estimated channel information) by the second set of reference signals may represent a portion of the channel for the resource elements corresponding to the first set of reference signals. In the channel estimation/ measurement, the user equipment UE may determine the channel coefficients for these resource elements. These channel coefficients may be complex numbers representing the gain and phase shift introduced by the channel at a particular time and frequency corresponding to those resource elements. The channel coefficients may be obtained by, for example, dividing the value of a symbol of the received reference signals by the value of a known reference signal symbol, but are not limited thereto. A channel matrix may be generated according to these channel coefficients, and the channel matrix may become or be transformed into the parameter of the estimated channel information (e.g., the first estimated channel information and another estimated channel information introduced later).

In step S340, the user equipment UE determines a second estimated channel information corresponding to the first set of reference signals on the first set of physical resources by using the first estimated channel information on a prediction model. Specifically, the second estimated channel information represents a reconstruction of the channel information for the full set of radio resources (i.e., the resource element corresponding to the first set of reference signals).

The prediction model is a model-based signal processing algorithm or trained by a machine learning algorithm. The prediction model represents the mathematical model of the second estimated channel information based on the first estimated channel information. In one embodiment, the signal processing algorithm may be a CSI prediction algorithm. The CSI prediction algorithm predicts the second estimated channel information from the first estimated channel information. For example, the user equipment UE establishes an optimization problem or function based on the parameters of the second estimated channel information. By solving the optimization problem or function, the parameters of the second estimated channel information could be obtained.

As an example of the CSI prediction algorithm, a machine learning algorithm is used to learn the relationship between the input and the output of the prediction model using training data. The input of the prediction model is the first estimated channel information, and the output of the prediction model is the second estimated channel information. In one embodiment, the machine learning algorithm may be a masked auto-encoder (MAE). The MAE is a self-supervised learning model. By masking part of the input images, MAE learns to predict the original image. Therefore, MAE could be used for using reduced CSI-RS (i.e., the second set of reference signals) but still report full CSI (e.g., the second estimated channel information). The MAE is trained to reconstruct a complete data structure, such as the parameter of the second estimated channel information, from a partially masked or incomplete input, such as the parameter of the first estimated channel information. For example, the training data set is a *N_{Rx}* × *N_{Tx}* channel matrix of MIMO channels from across the frequency domain (e.g. *N_{SB}* subbands). In the training procedure, the input of the prediction model is the masked MIMO channels, which are a part of *N_{Rx}* × *N_{Tx}* × *N_{SB}* MIMO channels are masked, unknown, or defined with a predetermined value. One of the goals of the training procedure is to recover masked channel coefficients. A loss Function of the training procedure may be Mean-Square-Error (MSE) of the masked channel coefficient. In some implementations, the prediction model may be trained on another device, and the trained model is deployed to the user equipment UE.

In this embodiment, the first estimated channel information is a masked version of the second estimated channel information. The first estimated channel information would be inputted into the prediction model, which then outputs the second estimated channel information. The prediction model processes the first estimated channel information based on its learned channel characteristics and correlations in the spatial and/ or frequency domain, and interpolates and extrapolates to fill the missing channel information. In some embodiments, the CSI-RS pattern of the network device NW is matched with the masking ratio of the prediction model of the user equipment UE. The masking ratio would be introduced later.

In step S350, the user equipment UE reports the channel state information associated with the second estimated channel information. Specifically, the channel coefficients or channel matrix of the second estimated channel information may be transformed to the parameter of the channel state information, such as CQI, PMI, or RI. The user equipment UE may format the parameter of the channel state information into a CSI report message. The channel state information may be further compressed to reduce its size. Then, the channel state information associated with the second estimated channel information could be reported through the CSI report message.

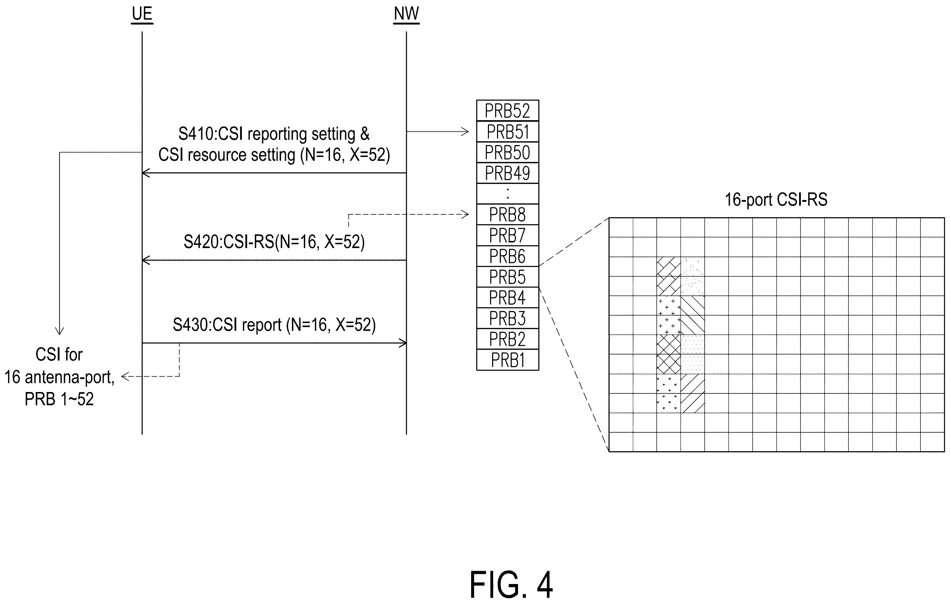

FIG. 4 is a signaling diagram illustrating a channel state information reporting procedure. Referring to FIG. 4, in step S410, the user equipment UE receives the CSI reporting setting configuration and CSI resource setting configuration, both indicate N=16 antenna ports and X=52 PRBs from the network device NW. In step S420, the user equipment UE receives reference signals on the resource elements corresponding to 16 antenna ports and 52 PRBs as indicated in the CSI resource setting configuration. The user equipment UE uses these reference signals for channel estimation to obtain the estimated channel information. Then, in step S430, the user equipment UE transmits a CSI report message carrying the CSI associated with estimated channel information for the channel corresponding to 16 antenna ports and 52 PRBs as indicated in the CSI resource setting configuration.

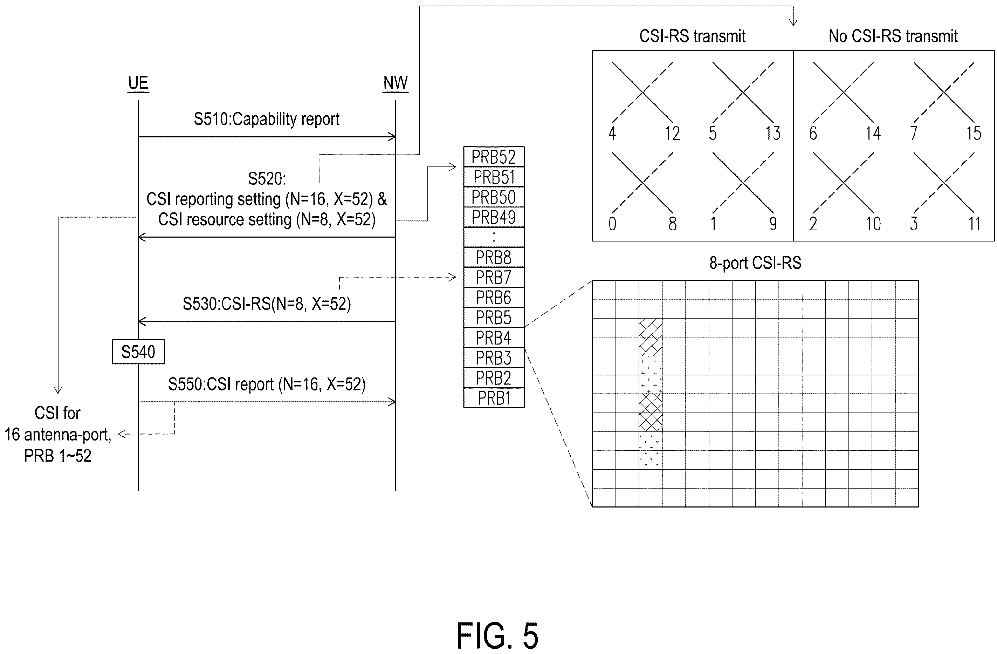

FIG. 5 is a signaling diagram illustrating a method of reporting channel state information with antenna-domain reference signal reduction according to an exemplary embodiment of the disclosure. Referring to FIG.5, an antenna-domain reduction scenario is introduced, where the CSI resource setting configuration (received in step S520) and the actually transmitted CSI-RS (received in step S530) correspond to only N=8 antenna ports (i.e., the second set of reference signals on the second set of physical resources), which is a subset of the N=16 antenna ports (i.e., the first set of reference signals on the first set of physical resources) in the CSI reporting setting configuration (received in step S520). The second set of reference signals on the second set of physical resources may be determined based on the capability report provided by the user equipment UE in step S510. The capability report may indicate model identification of the predication model. Each model identification is associated/ configured with a masking ratio. The masking ratio is a hyperparameter. The masking ratio is a ratio of a combination of the first set of reference signals and the first set of physical resources, and a combination of the second set of reference signals and the second set of physical resources. For example, the first set of physical resources is 52 PRBs and 16 antenna ports, and the second set of physical resources is 52 PRBs and 8 antenna ports. The combination of the first set of reference signals and the first set of physical resources is 52* 16, and the combination of the second set of reference signals and the second set of physical resources is 52*8. The masking ratio of the prediction model may be at least 50% or 60% which is larger than or equal to (52*16-52*8)/ 52*16.

In step S540, the prediction model is used to determine the second estimated channel information corresponding to the full set of CSI-RS with 52 PRBs and 16 antenna ports by the reduced CSI-RS with 52 PRBs and 8 antenna ports. Then, in step S550, the CSI report message carrying the CSI associated with the second estimated channel information is transmitted to the network device NW. The second estimated channel information may be further compressed to reduce the payload size before it is transmitted to the network device NW.

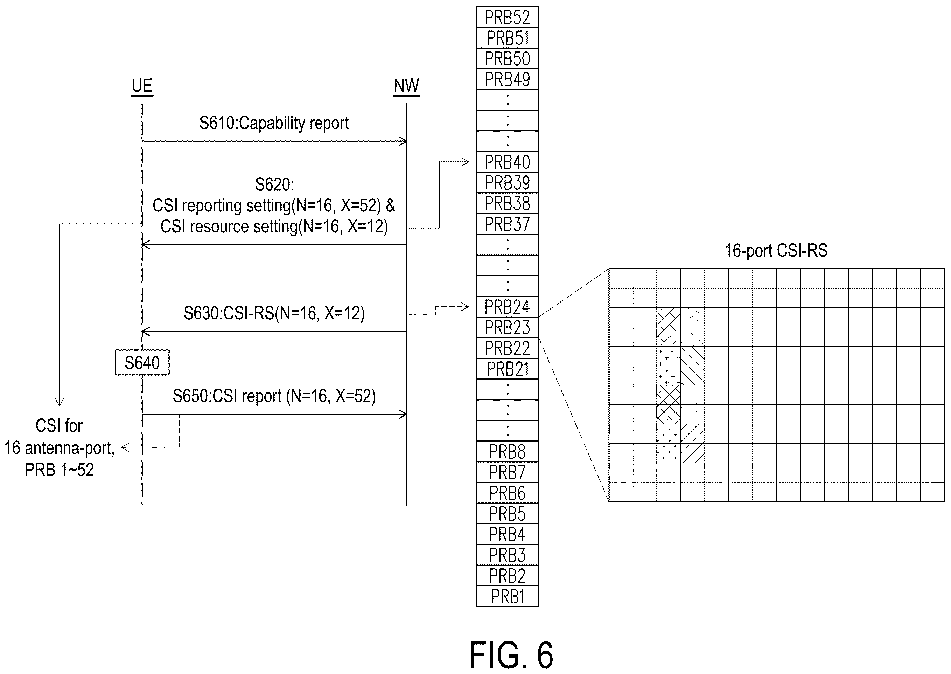

FIG. 6 is a signaling diagram illustrating a method of reporting channel state information with frequency-domain reference signal reduction according to an exemplary embodiment of the disclosure. Referring to FIG. 6, an frequency-domain reduction scenario is introduced, where the CSI resource setting configuration (received in step S620) and the actually transmitted CSI-RS (received in step S630) correspond to only X=12 PRBs (i.e., the second set of reference signals on the second set of physical resources), which is a subset of the X=52 PRBs (i.e., the first set of reference signals on the first set of physical resources) in the CSI reporting setting configuration (received in step S620). The second set of reference signals on the second set of physical resources may be determined based on the capability report provided by the user equipment UE in step S610. The capability report may indicate model identification of the predication model. Each model identification is associated/ configured with a masking ratio. For example, the first set of physical resources is 52 PRBs and 16 antenna ports, and the second set of physical resources is 12 PRBs and 16 antenna ports. The combination of the first set of reference signals and the first set of physical resources is 52* 16, and the combination of the second set of reference signals and the second set of physical resources is 12*16. The masking ratio of the prediction model may be at least 77% or 80% which is larger than or equal to (52* 16-12* 16)/ 52* 16.

In step S640, the prediction model is used to determine the second estimated channel information corresponding to the full set of CSI-RS with 52 PRBs and 16 antenna ports by the reduced CSI-RS with 12 PRBs and 16 antenna ports. Then, in step S650, the CSI report message carrying the CSI associated with the second estimated channel information is transmitted to the network device NW. The second estimated channel information may be further compressed to reduce the payload size before it is transmitted to the network device NW.

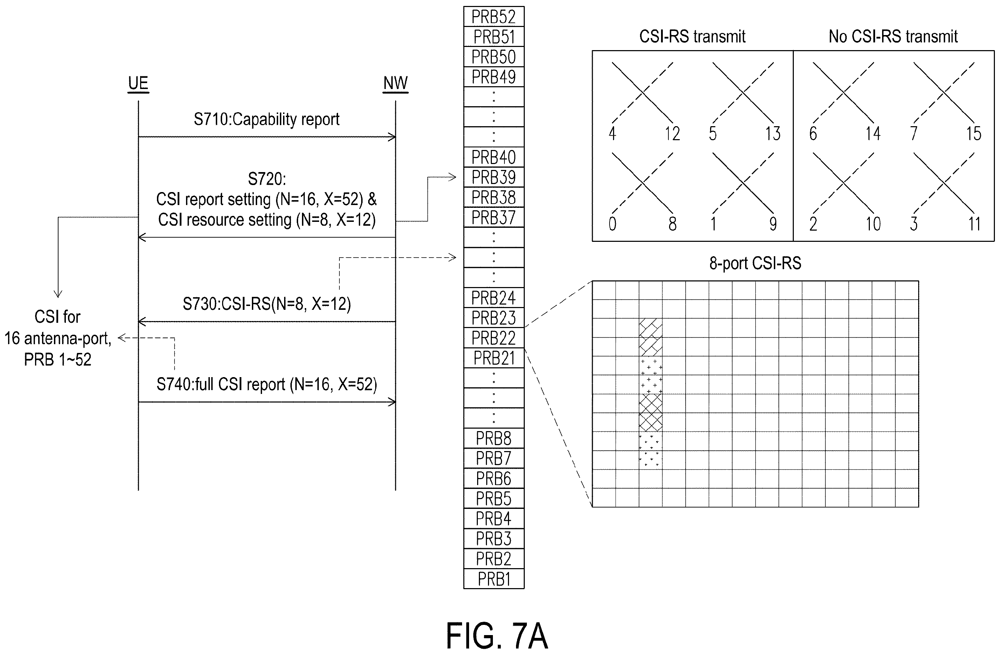

FIG. 7A is a signaling diagram illustrating a method of reporting channel state information with combined antenna-domain and frequency-domain reference signal reduction according to an exemplary embodiment of the disclosure. Referring to FIG. 7A, an antenna domain and frequency-domain reduction scenario is introduced, where the CSI resource setting configuration (received in step S720) and the actually transmitted CSI-RS (received in step S730) correspond to only X=12 PRBs and N=8 antenna ports (i.e., the second set of reference signals on the second set of physical resources), which is a subset of the X=52 PRBs and N=16 antenna ports (i.e., the first set of reference signals on the first set of physical resources) in the CSI reporting setting configuration (received in step S720). The second set of reference signals on the second set of physical resources may be determined based on the capability report provided by the user equipment UE in step S710. The capability report may indicate model identification of the predication model. Each model identification is associated/ configured with a masking ratio. For example, the first set of physical resources is 52 PRBs and 16 antenna ports, and the second set of physical resources is 12 PRBs and 8 antenna ports. The combination of the first set of reference signals and the first set of physical resources is 52* 16, and the combination of the second set of reference signals and the second set of physical resources is 12*8. The masking ratio of the prediction model may be at least 89% or 90% which is larger than or equal to (52*16-12*8)/ 52* 16.

In step S740, the prediction model is used to determine the second estimated channel information corresponding to the full set of CSI-RS with 52 PRBs and 16 antenna ports by the reduced CSI-RS with 12 PRBs and 8 antenna ports. Then, in step S740, the CSI report message carrying the CSI associated with the second estimated channel information is transmitted to the network device NW. The second estimated channel information may be further compressed to reduce the payload size before it is transmitted to the network device NW.

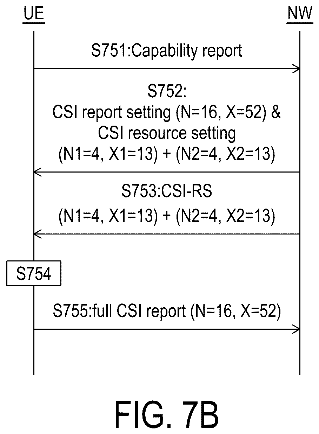

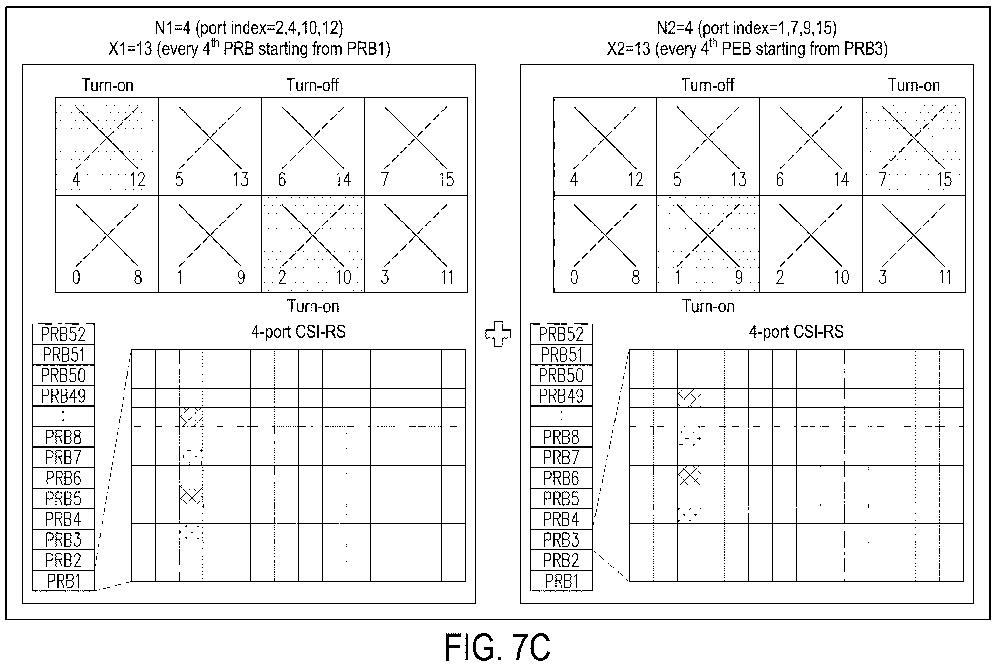

FIG. 7B is a signaling diagram illustrating a method of reporting channel state information with combined antenna-domain and frequency-domain reference signal reduction according to an exemplary embodiment of the disclosure, and FIG. 7C is a schematic diagram illustrating a resource allocation according to an exemplary embodiment of the disclosure. Referring to FIG. 7B and FIG. 7C, another antenna domain and frequency-domain reduction scenario is introduced, where the CSI resource setting configuration (received in step S752) and the actually transmitted CSI-RS (received in step S753) correspond to a combination of X1=13 PRBs and N1=4 antenna ports and X2=13 PRBs and N2=4 antenna ports (i.e., the second set of reference signals on the second set of physical resources), which is a subset of the X=52 PRBs and N=16 antenna ports (i.e., the first set of reference signals on the first set of physical resources) in the CSI reporting setting configuration (received in step S752). The second set of reference signals on the second set of physical resources may be determined based on the capability report provided by the user equipment UE in step S751. The capability report may indicate model identification of the predication model. Each model identification is associated/ configured with a masking ratio. For example, the first set of physical resources are 52 PRBs and 16 antenna ports, and the second set of physical resources are a combination of 13 PRBs and 4 antenna ports with 13 PRBs and 4 antenna ports.

In step S754, the prediction model is used to determine the second estimated channel information corresponding to the full set of CSI-RS with 52 PRBs and 16 antenna ports by the reduced CSI-RS on 13 PRBs (every 4^{th} PRBs, starting from PRB1) with 4 antenna ports (e.g., port index=2,4,10,12) and 13 PRBs (every 4^{th} PRBs, starting from PRB3) with 4 antenna ports (e.g., port index=1,7,9,15). Then, in step S755, the CSI report message carrying the CSI associated with the second estimated channel information is transmitted to the network device NW. The second estimated channel information may be further compressed to reduce the payload size before it is transmitted to the network device NW.

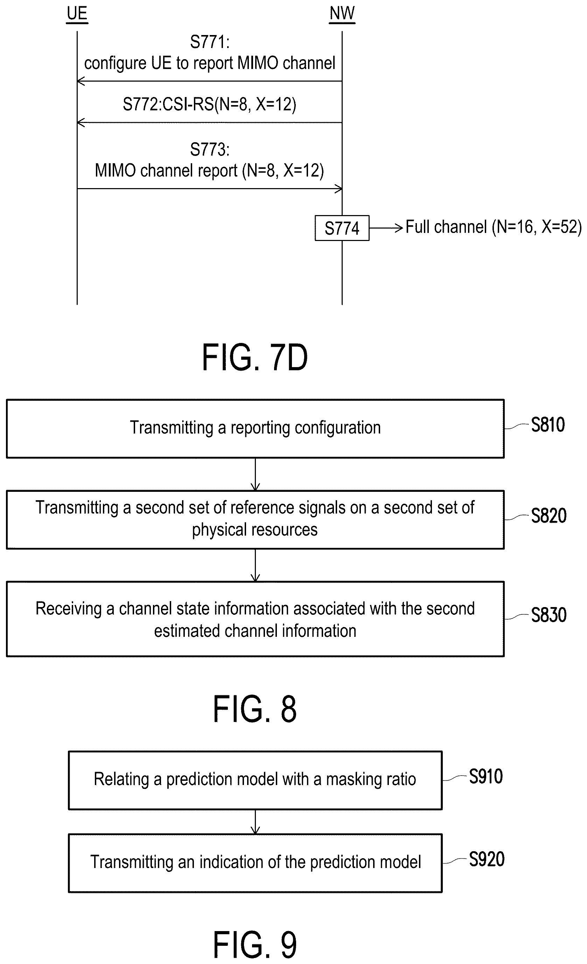

In one embodiment, there may be a network-side model. FIG. 7D is a signaling diagram illustrating a method of reporting channel state information for the network side model according to an exemplary embodiment of the disclosure. Referring to FIG. 7D, the user equipment UE may be configured by the network device NW to report the MIMO channel (step S771). The network device NW may transmit a reporting configuration, where the reporting configuration indicates a second set of physical resources and a second set of reference signals, for example, X=12 PRBs and N=8 antenna ports, for reporting. The actually transmitted CSI-RS (received in step S7772) corresponds to X=12 PRBs and N=8 antenna ports (i.e., the second set of reference signals on the second set of physical resources) as the same resources and reference signals configured in step S771. The user equipment UE may report a compressed MIMO channel, for example, a channel corresponding to 12 PRBs and 8 antenna ports to reduce feedback overhead (step S773). The report is used on a prediction model for predicting a second estimated channel information corresponding to the first set of reference signals on the first set of physical resources, where the second set of physical resources is a subset of the first set of physical resources or the second set of reference signals is a subset of the first reference signals. In this case, the network device NW first decompresses the MIMO channel, and then estimates the channel corresponding to the full set of CSI-RS (step S774), for example, with 52 PRBs and 16 antenna ports (i.e., the first set of reference signals on the first set of physical resources), by using the prediction model with the compressed MIMO channel corresponding to 12 PRBs and 8 antenna ports.

FIG. 8 is a flowchart illustrating a method of reporting channel state information performed by a network device, NW, according to an exemplary embodiment of the disclosure. Referring to FIG. 8, in step S810, the network device NW transmits a reporting configuration. The reporting configuration indicates a first set of physical resources and a first set of reference signals for reporting. In step S820, the network device NW transmits a second set of reference signals on a second set of physical resources. The second set of physical resources is less than the first set of physical resources, or the second set of reference signals is less than the first set of reference signals. The second set of reference signals on the second set of physical resources is used for determining the first estimated channel information. The first estimated channel information is used on a prediction model for determining a second estimated channel information corresponding to the first set of reference signals on the first set of physical resources, and the prediction model is a signal processing algorithm or is trained by a machine learning algorithm. In step S830, the network device NW receives a channel state information report associated with the second estimated channel information.

In one embodiment, the type of the first and second sets of physical resources includes a physical resource block (PRB), frequency band, and number of antenna ports.

In one embodiment, the type of the first and second sets of reference signals is channel-state-information reference signals (CSI-RS).

In one embodiment, the channel state information includes at least one of channel quality indicator (CQI), a precoding matrix indicator (PMI), explicit MIMO channel coefficients or their eigen-vectors and eigen-values, a rank indicator (RI), a layer indicator (LI), or a signal strength indicator.

In one embodiment, the reporting configuration is a CSI reporting setting configuration, and a configuration for the second set of reference signals on the second set of physical resources is a CSI resource setting configuration. The network device NW transmits the CSI resource setting configuration.

In one embodiment, the prediction model is configured with a masking ratio, and the masking ratio is the ratio of the combination of the first set of reference signals and the first set of physical resources, and the combination of the second set of reference signals and the second set of physical resources. The masking ratio can be inferred implicitly at the UE with the information of the first set and second set of physical resource of reference signals or signal explicitly from NW to UE or from UE to NW.

FIG. 9 is a flowchart illustrating a method of model management performed by a user equipment UE according to an exemplary embodiment of the disclosure. Referring to FIG. 9, in step S910, the user equipment UE relates a predication model with a masking ratio. Specifically, the prediction model is a signal processing algorithm or trained by a machine learning algorithm, the prediction model is used by inputting a first estimated channel information to restore a second estimated channel information corresponding to a first set of reference signals with a first set of physical resources, a second set of reference signals on a second set of physical resources is used for determining the first estimated channel information, and the masking ratio is a ratio of a combination of the first set of reference signals and the first set of physical resources and a combination of the second set of reference signals and the second set of physical resources. The prediction model and the masking ratio are introduced above, and the repeated description would be omitted.

The masking ratio may be the least ratio that the prediction model may recover the full channel corresponding to the first set of reference signals and the first set of physical resources from the partial channel corresponding to the second set of reference signals and the second set of physical resource in which this masking ratio is larger than or equals to a ratio of the number of masked resource elements to the number of the resource elements of the full channel. There may be multiple prediction models. Each prediction model is configured/ associated with its masking ratio, so as to relate the prediction model to its masking ratio.

In step S920, the user equipment UE transmits an indication of the prediction model to a network device NW.

In one embodiment, the indication of the prediction model is a capability report. For example, a UE capability report. The capability report indicates the prediction model with the masking ratio supported by the user equipment UE. The capability report may specify a mapping relation between the model identifications of one or more prediction models and their masking ratio. For example, table (1) is a mapping relation between m model identifications of prediction models and their masking ratio.

**Table (1)**

| Model identification | ID#1 | ... | ID#m |
|---|---|---|---|
| Masking ratio | N_1 % | ... | N_m % |

where m is a positive integer, N_1 to N_m are positive values. The capability report may include the model identifications. The network device NW may recognize the corresponding prediction models and their masking ratio with the received model identifications, indicated model identifications. Then, the network device NW may transmit corresponding reference signals, such as CSI-RS, based on the prediction model and/ or the masking ratio supported by the user equipment UE. That is, the second set of reference signals transmitted on the second set of physical resources may be determined according to the capability report, which reports the prediction model and/ or the masking ratio supported by the user equipment UE.

In one embodiment, the capability report may include RRC information elements that
(i) enumerate modelSetId(s) for model-assisted CSI compression/reporting and the corresponding masking-ratio profile(s) supported by the UE; and
(ii) declare a CSI processing unit describing compute/memory and inference-latency capability for executing the prediction model on CSI reports.

In one embodiment, the user equipment UE may report how many CSI Processing Units the model occupies when processing the CSI. The user equipment UE may report a single Processing Unit common to all Model IDs, or a separate report for each Model ID (i.e., the model identification). The CSI Processing Unit is related to the compute/memory and inference-latency capability for executing the prediction model on CSI reports. The user equipment UE may also report a Maximum CSI Processing Unit, which implies the number of simultaneous CSI reports it is capable of, i.e., the user equipment UE is not expected that the total number of CSI Processing Units occupied by simultaneously configured CSI reports to exceed the Maximum CSI Processing Unit of its capability.

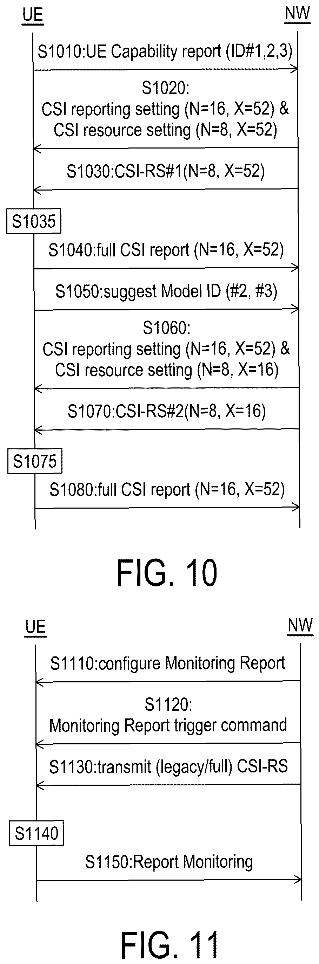

For example, FIG. 10 is a signaling diagram illustrating a model management procedure according to an exemplary embodiment of the disclosure. Referring to FIG. 10, in step S1010, a user equipment UE transmits a UE capability report to a network device NW. The UE capability report indicates ID#1, ID#2, and ID#3 of the prediction models. In step S1020, the network device NW transmits the CSI report setting configuration and the CSI resource setting configuration to the user equipment UE. The CSI report setting configuration indicates N=16 antenna ports and X=52 PRBs, which is the first set of reference signals on the first set of physical resources for CSI reporting. The CSI resource setting configuration indicates N=8 antenna ports and X=52 PRBs, which is the second set of reference signals on the second set of physical resources. In step S1030, the network device NW transmits CSI-RS#1, which is a set of CSI-RS transmitted on the resource elements corresponding to 8 antenna ports in each of 52 PRBs.

The CSI-RS#1 corresponds to the ID#1 of the prediction model. That is ID#1 matches the CSI-RS#1. In step S1035, the user equipment UE uses the ID#1 of the prediction model to determine the second estimated channel information corresponding to N=16 antenna ports and X=52 PRBs by using the first estimated channel information corresponding to N=8 antenna ports and X=52 PRBs. In step S1040, the user equipment UE transmits a full CSI report associated with the second estimated channel information corresponding to the full set of CSI-RS with 52 PRBs and 16 antenna ports to the network device NW.

In one embodiment, the user equipment UE may transmit a suggestion indication to suggest what reference signals the network device NW transmits. In the case, for example, an initial model activation, a model switch, or a fallback, the equipment UE transmits the suggestion indication. For example, the equipment UE detects a change of channel, and the suggestion indication may be transmitted.

Referring to FIG. 10, in step S1050, the UE transmits a suggestion indication to suggest what reference signals, such as CSI-RS, the network device NW can transmit. For example, ID#2 and ID#3 of the prediction models are suggested. In step S1060, the network device NW transmits another CSI report setting configuration and another CSI resource setting configuration to the user equipment UE. The CSI report setting configuration indicates N=16 antenna ports and X=52 PRBs, which is the first set of reference signals on the first set of physical resources for CSI reporting. However, the CSI resource setting configuration indicates N=8 antenna ports and X=16 PRBs, which is the second set of reference signals on the second set of physical resources. In step S1070, the network device NW transmits CSI-RS#2, which is a set of CSI-RS transmitted on the resource elements corresponding to 8 antenna ports in each of 16 PRBs.

The CSI-RS#2 corresponds to the ID#3 of the prediction model. In step S1075, the user equipment UE uses the ID#3 of the prediction model to determine the second estimated channel information corresponding to N=16 antenna ports and X=52 PRBs by using the first estimated channel information corresponding to N=8 antenna ports and X=16 PRBs. In step S1080, the user equipment UE transmits a full CSI report associated with the second estimated channel information corresponding to the full set of CSI-RS with 52 PRBs and 16 antenna ports to the network device NW.

In one embodiment, the indication of the prediction model is a monitored result. The monitored result may indicate a performance indicator between the second estimated channel information and the ground truth information, and the ground truth information is determined by the first set of reference signals on the first set of physical resources. The performance indicator (or called key performance indicator (KPI)) may be, for example, average error (e.g., normalized root-mean-square error (NMSE)), error distribution (e.g., NMSE for each monitoring instance), or events (e.g., more than N contiguous errors, where N is a positive integer). The ground truth information is the channel state information that is determined by using the full and completed set of reference signals, e.g., the first set of reference signals on the first set of physical resources, and becomes a golden sample to evaluate the estimated channel information.

In one embodiment, the monitored result may (further) indicate one or more suggested model identifications for model switch.

For example, FIG. 11 is a signaling diagram illustrating a network-initiated performance monitoring procedure according to an exemplary embodiment of the disclosure. Referring to FIG. 11, in step S1110, a user equipment UE receives a configuration to configure a monitoring report (or called monitoring configuration) that indicates one or more performance indicators from a network device NW. The monitoring configuration indicates the type of the performance indicator, and the type of the performance indicator is at least one of an average error, an error distribution, or indicates whether pre-defined events are satisfied. In step S1120, the user equipment UE receives a monitoring command (e.g., monitoring report trigger command) from the network device NW. The monitoring command may indicate a generation of the performance indicator indicated in the monitoring report. That is, the monitoring command is used to trigger the user equipment UE to generate the performance indicator. The monitoring command may indicate the legacy/ full CSI-RS resource, which is the resource elements of the first set of reference signals on the first set of physical resources. Furthermore, Step S1110 may be an RRC configuration, and Step S1120 may be a DCI message. Steps S1110 and S1120 may be combined into a single message; in this case, the message may be a DCI message.

In step S1130, the network device NW transmits (legacy/ full) CSI-RS to the user equipment UE. The legacy/ full CSI-RS is the first set of reference signals on the first set of physical resources. The user equipment UE receives the first set of reference signals on the first set of physical resources.

In one embodiment, the user equipment UE may receive model identities (or called the abovementioned model identifications) for which the performance indicator is associated, if any. The monitoring command may (further) include the model identifications of the prediction models.

In one embodiment, the monitoring command may (further) include the format of the monitoring report. The format of the monitoring report is the content to report. For example, the type of performance indicators in the monitoring report.

In one embodiment, the user equipment UE may receive pre-defined events, if any. The monitoring command may (further) include the types of one or more pre-defined events to trigger the monitoring report. That is, the monitoring report is event-based. The event may be, for example, consecutive *N* inferences for which the monitored normalized square-error is larger than the threshold *ε*. In some embodiments, the user equipment UE may not or disable to send the monitoring report when (only when or in response to) the pre-defined events are not satisfied.

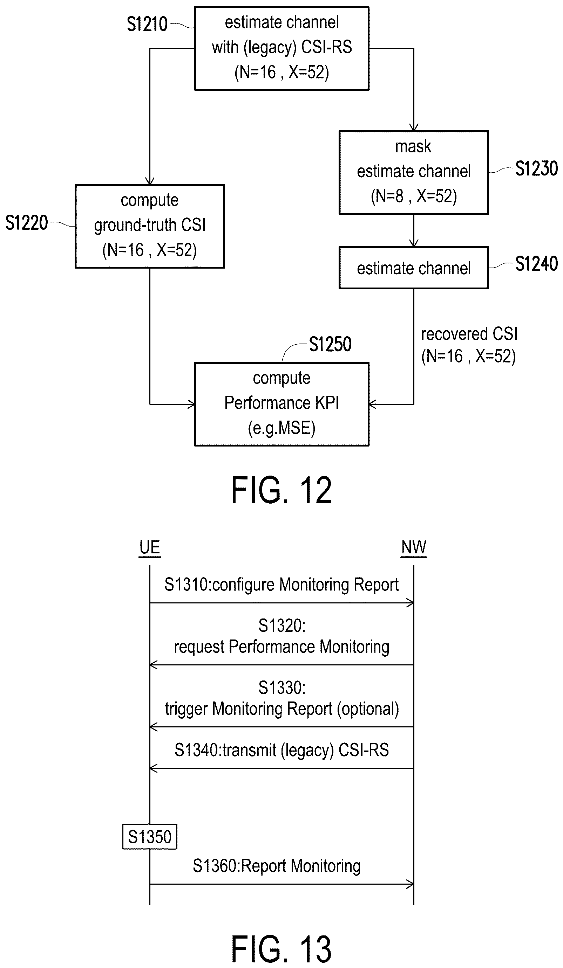

In step S1140, the user equipment UE evaluates the performance indicator. For example, FIG. 12 is a block diagram illustrating a process for computing a key performance indicator (KPI) according to an exemplary embodiment of the disclosure. Referring to FIG. 12, the user equipment UE estimates the channel with (legacy/ full) CSI-RS on N=16 antenna ports and X=52 PRBs. In step S1220, the user equipment UE uses the (legacy/ full) CSI-RS to compute the ground truth CSI (i.e., the ground truth information).

On the other hand, in step S1230, the user equipment UE masks the estimated channel, so that the unmasked channel corresponds to N=8 antenna ports and X=52 PRBs. Then, in step S1240, the user equipment UE estimates the channel corresponding to full/ recovered CSI-RS with N=16 antenna ports and X=52 PRBs by using the prediction model with the unmasked channel, to generate estimated channel information. In one embodiment, the user equipment UE may receive a model identification and use the corresponding prediction model (associated with the received model identification) to restore a second estimated channel information corresponding to the channel associated with the full/ recovered CSI-RS. In step S1250, the user equipment UE computes the performance KPI (e.g., NMSE between the ground truth CSI and the estimated channel information).

Referring to FIG. 11, the user equipment UE generates the monitored result, including the performance indicator. In step S1150, the user equipment UE reports monitoring (i.e., transmitting the monitoring result) to the network device NW.

In one embodiment, the user equipment UE may determine that a pre-defined event is satisfied. Then, the user equipment UE may transmit the monitored result in response to (when or only when) determining the pre-defined event being satisfied.

FIG. 13 is a signaling diagram illustrating a UE-initiated performance monitoring procedure according to an exemplary embodiment of the disclosure. Referring to FIG. 13, in step S1310, a user equipment UE receives a configuration to configure a monitoring report (or called monitoring configuration) that indicates one or more performance indicators from a network device NW. The monitoring configuration indicates the type of the performance indicator, and the type of the performance indicator is at least one of an average error, an error distribution, or indicates whether pre-defined events are satisfied. In step S1320, the user equipment UE requests performance monitoring when, for example, the user equipment UE detects a channel statistics change, e.g., mean and/or variance of channel estimation based on CSI-RS drift out of a range.

In step S1330, the network device NW may trigger a Monitoring Report, but it may be omitted in some implementations. In step S1340, the network device NW transmits (legacy/ full) CSI-RS to the user equipment UE. The legacy/ full CSI-RS is the first set of reference signals on the first set of physical resources. The user equipment UE receives the first set of reference signals on the first set of physical resources.

In step S1350, the user equipment UE evaluates the performance indicator as mentioned in step S1140 and FIG. 12. Then, in step S1360, the user equipment UE reports monitoring (i.e., transmitting the monitoring result) to the network device NW. In this embodiment, a faster response to model failure may be achieved, and the loading of the network device NW could be offset to the user equipment UE.

In one embodiment, the indication of the prediction model indicates a retraining request of the prediction model, and the retraining request is used for requesting a retrain of the prediction model. The retraining of the prediction model may be, for example, fine-tuning the prediction model.

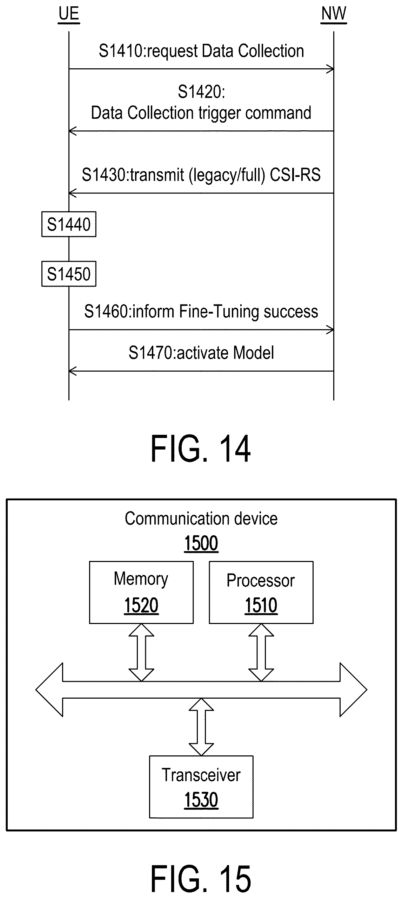

For example, FIG. 14 is a signaling diagram illustrating a model retraining procedure according to an exemplary embodiment of the disclosure. Referring to FIG. 14, a user equipment UE decides its prediction model needs retraining (e.g., finetuning). The case that the prediction model needs to be retrained may be, for example, channel statistics change, or monitoring KPI does not meet thresholds. In step S1410, the user equipment UE requests data collection (e.g., transmitting a retraining request) to a network device NW. The retraining request may include the model identification of the prediction model associated with a specific masking ratio to be fine-tuned. The retraining request may suggest the network device NW switch to another Model ID (i.e., other model identifications).

In step S1420, the network device NW may transmit a data collection trigger command (or called a retraining command) to the user equipment UE. The retraining command may indicate a configuration for a third set of reference signals with a third set of physical resources. For example, (legacy/ full) CSI-RS. In some embodiments, the retraining command may (further) indicate to deactivate the model identification of the prediction model currently used by the user equipment UE. In step S1430, the network device NW transmits (legacy/ full) CSI-RS to the user equipment UE. The legacy/ full CSI-RS is the third set of reference signals on the third set of physical resources. The user equipment UE receives the third set of reference signals on the third set of physical resources according to the configuration for the third set of reference signals with the third set of physical resources.

In step S1440, the user equipment UE performs data collection. For example, the user equipment UE uses the (legacy/ full) CSI-RS to compute the ground truth CSI (i.e., the ground truth information). In step S1450, the user equipment UE retrains the prediction model (e.g., model fine-tuning) with a third estimated channel information determined by using the third set of reference signals on the third set of physical resources, to generate a retrained prediction model. For example, the user equipment UE masks the estimated channel corresponding to the third set of reference signals on the third set of physical resources. Then, the user equipment UE estimates the channel corresponding to full/ recovered CSI-RS by using the prediction model with the unmasked channel, to generate third estimated channel information. The loss function between the third estimated channel information and the ground truth information is used to fine-tune the prediction model. The parameters of the prediction model, such as the weights and offsets, may be changed.

In step S1460, the user equipment UE informs that fine-tuning succeeds (i.e., transmitting a result of retraining the prediction model). In step S1470, the network device NW may activate the retrained prediction model. Then, the user equipment UE may use the retrained prediction model to estimate the channel.

FIG. 15 is a block diagram illustrating a communication device 1500 according to an exemplary embodiment of the disclosure. Referring to FIG. 15, the communication device 1500 may be a UE or a network device. The communication device 1500 may include, but is not limited thereto, a processor 1510. The processor 1510 (e.g., having processing circuitry) may include a CSI Processing Unit (CPU). In some implementations, the processor 1510 may include an intelligent hardware device, e.g., a Central Processing Unit (CPU), a microcontroller, an ASIC, etc. The processor 1510 can call and run a computer program from memory to implement the method in the embodiment of the disclosure.

Since the program code stored in the communication device 1500 adopts all the technical solutions of all the foregoing embodiments when being executed by the processor 1510, it at least has all the advantageous effects brought by all the technical solutions of all the foregoing embodiments, and no further description is incorporated herein.

Optionally, as shown in FIG. 15, the communication device 1500 may further include a memory 1520. The memory 1520 may include computer-storage media in the form of volatile and/or non-volatile memory. The memory 1520 may be removable, non-removable, or a combination thereof. Exemplary memory includes solid-state memory, hard drives, optical-disc drives, etc. The processor 1510 may call and run a computer program from the memory 1520 to implement the method in the embodiment of the disclosure.

The memory 1520 may be a separate device independent of the processor 1510, or may be integrated in the processor 1510.

Optionally, as shown in FIG. 15, the communication device 1500 may further include a transceiver 1530, and the processor 1510 may control the transceiver 1530 to communicate with other devices. The transceiver 1530, having a transmitter (e.g., transmitting/transmission circuitry) and a receiver (e.g., receiving/reception circuitry), may be configured to transmit and/or receive time and/or frequency resource partitioning information. In some implementations, the transceiver 1530 may be configured to transmit in different types of subframes and slots, including, but not limited to, usable, non-usable, and flexibly usable subframes and slot formats. The transceiver 1530 may be configured to receive data and control channels.

Specifically, the transceiver 1530 may send information or data to other devices, or receive information or data sent by other devices.

Specifically, the transceiver 1530 may include a transmitter and a receiver. The transceiver 1530 may further include an antenna, and the number of antennas may be one or more.

Optionally, the communication device 1500 may specifically be a network device in an embodiment of the disclosure, and the communication device 1500 may implement the corresponding process implemented by the network device in various methods of the embodiment of the disclosure. For the conciseness, related descriptions are omitted.

Optionally, the communication device 1500 may specifically be a mobile terminal, a terminal device, or a UE in an embodiment of the disclosure, and the communication device 1500 may implement the corresponding process implemented by the mobile terminal, the terminal device, or the UE in various methods in the embodiment of the disclosure. For conciseness, a related description is omitted.

## Claims

1. A method of reporting channel state information, performed by a user equipment (UE), the method comprising:
receiving a reporting configuration, wherein the reporting configuration indicates a first set of physical resources and a first set of reference signals for reporting;
receiving a second set of reference signals on a second set of physical resources, wherein the second set of physical resources is less than the first set of physical resources or the second set of reference signals is less than the first set of reference signals;
determining a first estimated channel information corresponding to the second set of reference signals on the second set of physical resources;
determining a second estimated channel information corresponding to the first set of reference signals on the first set of physical resources by using the first estimated channel information on a prediction model, wherein the prediction model is a signal processing algorithm or trained by a machine learning algorithm; and
reporting a channel state information associated with the second estimated channel information.

2. The method according to claim 1, wherein a type of the first and second sets of reference signals is Channel-State-Information Reference Signals, CSI-RS.

3. The method according to any one of claims 1-2, wherein the channel state information comprises at least one of a Channel Quality Indicator, CQI, a Precoding Matrix Indicator, PMI, a Rank Indicator, RI, a Layer Indicator, LI, or a signal strength indicator.

4. The method of any one of claims 1-3, wherein the reporting configuration is a CSI Reporting Setting configuration, a configuration for the second set of reference signals on the second set of physical resources is a CSI Resource Setting configuration, and the method further comprises:
receiving the CSI Resource Setting configuration.

5. The method of any one of claims 1-4, further comprising:
collecting a dataset of estimated channel information by receiving reference signals corresponding to the first set of reference signals on the first set of physical resources;
transferring the dataset to a model training entity; and
receiving trained models from the model training entity.

6. The method of any one of claims 1-5, wherein prediction model is configured with a masking ratio, and the masking ratio is a ratio of a combination of the first set of reference signals and the first set of physical resources and a combination of the second set of reference signals and the second set of physical resources.

7. A method of reporting channel state information, performed by a network device (NW), the method comprising:
transmitting a reporting configuration, wherein the reporting configuration indicates a first set of physical resources and a first set of reference signals for reporting;
transmitting a second set of reference signals on a second set of physical resources, wherein the second set of physical resources is less than the first set of physical resources or the second set of reference signals is less than the first set of reference signals, the second set of reference signals on the second set of physical resources is used for determining a first estimated channel information, and the first estimated channel information is used on a prediction model for determining a second estimated channel information corresponding to the first set of reference signals on the first set of physical resources, and the prediction model is a signal processing algorithm or is trained by a machine learning algorithm; and
receiving a channel state information report associated with the second estimated channel information.

8. The method according to claim 7, wherein a type of the first and second sets of reference signals is Channel-State-Information Reference Signals, CSI-RS.

9. The method of any one of claims 7-8, wherein the channel state information comprises at least one of a Channel Quality Indicator, CQI, a Precoding Matrix Indicator, PMI, a Rank Indicator, RI, a Layer Indicator, LI, or a signal strength indicator.

10. The method of any one of claims 7-9, wherein the reporting configuration is a CSI Reporting Setting configuration, a configuration for the second set of reference signals on the second set of physical resources is a CSI Resource Setting configuration, and the method further comprises:
transmitting the CSI Resource Setting configuration.

11. The method of any one of claims 7-10, wherein the prediction model is configured with a masking ratio, and the masking ratio is a ratio of a combination of the first set of reference signals and the first set of physical resources and a combination of the second set of reference signals and the second set of physical resources.

12. A method of model management, performed by a user equipment (UE), the method comprising:
relating a prediction model with a masking ratio, wherein the prediction model is a signal processing algorithm or trained by a machine learning algorithm, the prediction model is used by inputting a first estimated channel information to restore a second estimated channel information corresponding to a first set of reference signals with a first set of physical resources, a second set of reference signals on a second set of physical resources is used for determining the first estimated channel information, and the masking ratio is a ratio of a combination of the first set of reference signals and the first set of physical resources and a combination of the second set of reference signals and the second set of physical resources; and
transmitting an indication of the prediction model.

13. The method according to claim 12, wherein the indication of the prediction model is a capability report, and the capability report indicates the prediction model with the masking ratio supported by the UE.

14. The method according to any one of claims 12-13, further comprising:
receiving a model identification and using the corresponding prediction model to restore a second estimated channel information.

15. The method according to any one of claims 12-14, wherein the indication of the prediction model is a monitored result, the monitored result indicates a performance indicator between the second estimated channel information and a ground truth information, and the ground truth information is determined by the first set of reference signals on the first set of physical resources.

16. The method according to claim 15, further comprising:
receiving a monitoring command, wherein the monitoring command indicates a generation of the performance indicator;
receiving model identities for which the performance indicator is associated with, if any;
receiving pre-defined events, if any;
receiving the first set of reference signals on the first set of physical resources; and
generating the monitored result comprising the performance indicator.

17. The method according to claim 16, further comprising:
receiving a monitoring configuration, wherein the monitoring configuration indicates a type of the performance indicator, and the type of the performance indicator is at least one of an average error, an error distribution, or indicates whether pre-defined events are satisfied.

18. The method according to claim 15, wherein transmitting the indication of the prediction model comprises:
determining a pre-defined event is satisfied; and
transmitting the monitored result in response to determining that the pre-defined event being satisfied.

19. The method according to any one of claims 12-18, wherein the indication of the prediction model indicates a retraining request of the prediction model, and the retraining request is used for requesting a retrain of the prediction model.

20. The method according to any one of claims 12-19, further comprising:
receiving a retraining command, wherein the retraining command indicates a configuration for a third set of reference signals with a third set of physical resources;
receiving the third set of reference signals on the third set of physical resources according to the configuration for the third set of reference signals with the third set of physical resources;
retraining the prediction model with a third estimated channel information determined by using the third set of reference signals on the third set of physical resources; and
transmitting a result of retraining the prediction model.
